(19) Europäisches Patentamt / European Patent Office / Office européen des brevets

(11) **EP 4 019 932 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **21210912.8**

(22) Anmeldetag: **27.11.2021**

(51) Internationale Patentklassifikation (IPC):
***G01N 11/00*** *(2006.01)*

(52) Gemeinsame Patentklassifikation (CPC):
**G01N 11/00;** G01N 2011/008

(54) **VERFAHREN UND MESSANORDNUNG ZUM ERMITTELN EINER FLIESSEIGENSCHAFT EINES FLUIDS**

METHOD AND MEASUREMENT ASSEMBLY FOR DETECTING A FLOW PARAMETER OF A FLUID

PROCÉDÉ ET AGENCEMENT DE MESURE PERMETTANT DE DÉTERMINER UNE PROPRIÉTÉ D'ÉCOULEMENT D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2020 DE 102020216545**

(43) Veröffentlichungstag der Anmeldung:
**29.06.2022 Patentblatt 2022/26**

(73) Patentinhaber:
• **Friedrich-Alexander-Universität Erlangen-Nürnberg**
**91054 Erlangen (DE)**
• **Julius-Maximilians-Universität Würzburg**
**97070 Würzburg (DE)**

(72) Erfinder:
• **SCHUBERT, Dirk Wolfram**
**91330 Eggolsheim (DE)**
• **DALTON, Paul**
**Eugene, OR 97405 (US)**
• **SCHRÜFER, Stefan**
**91052 Erlangen (DE)**

(74) Vertreter: **FDST Patentanwälte**
**Nordostpark 16**
**90411 Nürnberg (DE)**

(56) Entgegenhaltungen:
• **WUNNER FELIX M ET AL: "Printomics: the high-throughput analysis of printing parameters applied to melt electrowriting", BIOFABRICATION, vol. 11, no. 2, 24 January 2019 (2019-01-24), pages 025004, XP055900321, DOI: 10.1088/1758-5090/aafc41**
• **THOMAS M. ROBINSON ET AL: "The Next Frontier in Melt Electrospinning: Taming the Jet", ADVANCED FUNCTIONAL MATERIALS, vol. 29, no. 44, 18 August 2019 (2019-08-18), DE, pages 1904664, XP055638182, ISSN: 1616-301X, DOI: 10.1002/adfm.201904664**

EP 4 019 932 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren sowie eine Messanordnung zum Ermitteln von Fließeigenschaften eines Fluids.

Fließeigenschaften (oder auch: rheologische Eigenschaften) von Fluiden beeinflussen die Nutzung und Verarbeitung solcher Fluide regelmäßig in nicht unerheblichen Maß. Hauptmerkmal ist dabei üblicherweise die sogenannte Viskosität, die angibt, wie zähfließend ein Fluid ist. "Niederviskos" bezeichnet dabei dünnflüssige Fluide, wohingegen eine zunehmende (d. h. zu höheren Werten steigende) Viskosität ("hochviskos") eine Zunahme der "Zähigkeit" oder auch "Dickflüssigkeit" beschreibt. Während bspw. Wasser, Öle und dergleichen meist sogenanntes newtonsches Fließverhalten zeigen, d. h. einen linearen Zusammenhang zwischen Schergeschwindigkeit und Scherspannung oder anders ausgedrückt eine über der Schergeschwindigkeit konstante Viskosität aufweisen, unterliegen Suspensionen, Kunststoffschmelzen oder dergleichen meist anderen Zusammenhängen. Kunststoffschmelzen zeigen dabei normalerweise "strukturviskoses" Verhalten, d. h. deren Viskosität sinkt mit steigender Schergeschwindigkeit.

Strukturviskosität wird üblicherweise mit vergleichsweise hoher Präzision üblicherweise in einem (Platte-Platte- oder Kegel-Platte-) Rheometer untersucht. Dabei wird das zu untersuchende Material zwischen zwei planparallele, meist kreisförmige Platten, oder in einer Abwandlung zwischen eine flache und eine konische Platte, eingebracht, meist temperiert und durch Rotation oder Oszillation einer der Platten unter Scherspannung gesetzt. Aus dem messtechnisch erfassbaren Drehmoment zwischen den Platten kann auf die Schergeschwindigkeits-abhängige Viskosität geschlossen werden.

Dagegen gestaltet sich die Ermittlung der sogenannten Dehnviskosität, also der Viskosität in einer Dehnströmung, meist vergleichsweise schwierig. Beispielsweise kommt hier ein sogenanntes "Capillary Breakup Extensional Rheometer" ("CaBER") zum Einsatz. Bei diesem wird das zu untersuchende Material zwischen zwei Kontaktflächen eingebracht, die dann schnell auf einen vorgegebenen Abstand auseinanderbewegt werden. Eine Hauptinformation ist hier die Zeit bis zum Reißen der dabei gebildeten Materialbrücke. Allerdings ist dieses Verfahren einigen Einflüssen unterworfen, die die Anwendung und Auswertung erschweren.

Aus CN 106 442 221 A ist ein Verfahren bekannt, bei dem zur Ermittlung von rheologischen Eigenschaften eine viskose Flüssigkeit mittels eines Förderbands gegen eine Prallplatte aufgestaut wird und unter anderem anhand der Art, wie die Flüssigkeit sich anstaut auf die rheologischen Eigenschaften geschlossen wird.

WUNNER FELIX M ET AL: "Printomics: the high-throughput analysis of printing parameters applied to melt electrowriting", BIOFABRICATION, Bd. 11, Nr. 2, 24. Januar 2019, Seite 025004, XP055900321 und THOMAS M. ROBINSON ET AL: "The Next Frontier in Melt Electrospinning: Taming the Jet", ADVANCED FUNCTIONAL MATERIALS, Bd. 29, Nr. 44, 18. August 2019, Seite 1904664, XP055638182 beschreiben ein sogenanntes "melt electrowriting" (MEW), das eine Art 3D-Druck mit elektrostatischer Unterstützung darstellt. Dabei werden Verarbeitungseinflüsse beleuchtet.

Der Erfindung liegt die Aufgabe zugrunde, die Ermittlung einer Fließeigenschaft eines Fluids zu verbessern.

Diese Aufgabe wird erfindungsgemäß gelöst durch ein Verfahren mit den Merkmalen des Anspruchs 1. Außerdem wird diese Aufgabe erfindungsgemäß gelöst durch eine Messanordnung mit den Merkmalen des Anspruchs 11. Vorteilhafte und teils für sich erfinderische Ausführungsformen und Weiterbildungen der Erfindung sind in den Unteransprüchen und der nachfolgenden Beschreibung näher dargelegt.

Das erfindungsgemäße Verfahren und die erfindungsgemäße Messanordnung dienen jeweils zum Ermitteln einer Fließeigenschaften eines Fluids. Vorzugsweise wird das Verfahren dabei mittels der Messanordnung durchgeführt.

Verfahrensgemäß wird hierbei das Fluid mit einem (insbesondere zeit-) konstanten Volumenstrom durch eine Düse gefördert. Der dabei erzeugte Fluidstrang (d. h. das aus der Düse extrudierte Fluid) wird auf einem Substrat abgelegt. Zwischen der Düse und dem Substrat erfolgt dabei eine Relativbewegung unter einem Vorschubgeschwindigkeitswert. Anders ausgedrückt werden die Düse und das Substrat mit dem Vorschubgeschwindigkeitswert relativ zueinander bewegt. Dabei wird eine Kontur des Fluidstrangs zwischen Düse und Substrat optisch vermessen. Diese Kontur bildet sich insbesondere aufgrund des Volumenstroms und der Vorschubgeschwindigkeit sowie in Abhängigkeit von wenigstens einer Fließeigenschaft des Fluids aus. Aus der Kenntnis des (insbesondere vorgegebenen) Volumenstroms, des (insbesondere vorgegebenen) Vorschubgeschwindigkeitswerts und der Kontur des Fluidstrangs wird dann als Fließeigenschaft auf eine, insbesondere dehnratenabhängige, Dehnviskosität, d. h. insbesondere eine Dehnviskosität bei unterschiedlichen Dehnraten, des Fluids geschlossen. Vorzugsweise wird dabei auf den jeweiligen dehnratenabhängigen Istwert der Dehnviskosität geschlossen. Generell ausgedrückt wird also die Dehnviskosität (vorzugsweise dehnratenabhängig) aus der vermessenen Kontur des Fluidstrangs und dem Volumenstrom abgeleitet, d. h. berechnet.

Die erfindungsgemäße Messanordnung weist eine (insbesondere die vorstehend beschriebene) Düse auf, die insbesondere dazu dient, den Fluidstrang zu formen. Die Messeinrichtung weist außerdem eine Fördervorrichtung auf, mittels derer im bestimmungsgemäßen Betrieb das Fluid durch die Düse mit dem vorstehend beschriebenen konstanten Volumenstrom gefördert wird. Ferner weist die Messanordnung ein Substrat auf, auf dem im bestimmungsgemäßen Betrieb der von der Düse erzeugte Fluidstrang abgelegt wird. Die Messanordnung weist des Weiteren eine Vorschubeinrichtung auf, um - im bestimmungsgemäßen Betrieb - eine Relativbewegung zwischen Düse und Substrat unter einem (vorzugsweise vorgegebenen) Vorschubgeschwindigkeitswert hervorzurufen. Die Messanordnung weist außerdem zum Vermessen der Kontur des Fluidstrangs zwischen Düse und Substrat eine optische Erfassungseinheit auf. Ferner weist die Messanordnung einen Controller auf, der dazu eingerichtet ist, aus der Kenntnis des Volumenstroms, des Vorschubgeschwindigkeitswerts und der Kontur des Fluidstrangs auf die Dehnviskosität als Fließeigenschaft des Fluids zu schließen. Insbesondere ist der Controller also dazu eingerichtet, die Auswertung der mittels der optischen Erfassungseinheit erfassten Daten insbesondere selbsttätig durchzuführen. Die Messanordnung ist somit insgesamt vorzugsweise dazu eingerichtet das hier und im Folgenden näher beschriebene Verfahren selbsttätig oder in Interaktion mit Bedienpersonal durchzuführen.

Das Verfahren nutzt dabei vorzugsweise die Messanordnung und damit die hier und im Folgenden näher beschriebenen körperlichen Merkmale der Messanordnung. Entsprechend umgekehrt weist die Messanordnung insbesondere auch die sich aus der Beschreibung des Verfahrens ergebenden körperlichen Merkmale gleichermaßen auf. Die hier und im Folgenden beschriebenen Vorteile kommen dabei dem Verfahren sowie der Messanordnung gleichermaßen zu.

Über die Vorschubgeschwindigkeit wird erkanntermaßen eine Dehnung (bspw. quantifizierbar als "Dehnrate") auf das Fluid aufgeprägt. Diese schlägt sich je nach Viskosität, insbesondere Dehnviskosität nach Austritt aus der Düse in der Kontur des Fluidstrangs, d. h. insbesondere in welcher Form dieser sich von der Düse zum Substrat erstreckt, nieder. Da dies erkanntermaßen optisch erfassbar ist, ermöglichen die Messanordnung durch ihren prinzipiell unaufwendigen Aufbau sowie das Verfahren einen einfachen Zugang zur Dehnviskosität.

Grundsätzlich eignet sich die Messanordnung auch zum Einsatz in einem handelsüblichen 3D-Drucker, der in diesem Fall vorzugsweise "nur noch" durch die optische Erfassungseinheit sowie gegebenenfalls den Controller erweitert werden braucht.

In bevorzugter Ausgestaltung ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware, insbesondere einer Analysesoftware, programmtechnisch implementiert ist, so dass das Verfahren - gegebenenfalls in Interaktion mit Bedienpersonal - bei Ausführung der Betriebssoftware in dem Mikrocontroller automatisch (d. h. selbsttätig) durchgeführt wird. Der Controller kann im Rahmen der Erfindung alternativ aber auch durch ein nicht-programmierbares elektronisches Bauteil, z.B. einen ASIC, gebildet sein, in dem die Funktionalität zur Durchführung des erfindungsgemäßen Verfahrens mit schaltungs-technischen Mitteln implementiert ist.

Beispielsweise handelt es sich - für den Fall, dass die Messanordnung wie vorstehend beschrieben durch Erweiterung eines 3D-Druckers ausgebildet ist - bei dem Controller um den des 3D-Druckers, der vorzugsweise mittels der vorstehend genannten Analysesoftware zur Durchführung oder Steuerung des Verfahrens eingerichtet wurde.

Vorzugsweise ist die Vorschubeinrichtung dazu eingerichtet, die Düse gegenüber dem insbesondere ortsfesten Substrat, das bspw. in Form einer Art Tischplatte an einer die Düse und die Vorschubeinrichtung tragenden Basis ausgebildet ist, zu bewegen. Beispielsweise umfasst die Vorschubeinrichtung dazu einen Elektromotor und einen nachgelagerten Riemen- oder Spindeltrieb. Grundsätzlich ist es aber gleichermaßen möglich, die Düse ortsfest anzuordnen und das Substrat relativ zur Düse zu bewegen.

In einer bevorzugten Verfahrensvariante wird die Düse auf einen Zieltemperaturwert temperiert. Dies ist für den Fall zweckmäßig, dass als Fluid eine Kunststoffschmelze herangezogen wird. Unter Temperierung wird hier und im Folgenden aber nicht nur die Erwärmung auf einen gegenüber Raumtemperatur erhöhten Zieltemperaturwert verstanden, sondern vorzugsweise auch das möglichst "Konstanthalten" auf diesem Zieltemperaturwert. Grundsätzlich ist es nämlich auch denkbar, dass, bspw. im Fall von mit Partikeln gefüllten Fluiden, aufgrund der Extrusion des Fluids aus der Düse eine Erwärmung des Fluids und der Düse erfolgt. Um eine solche - meist unerwünschte, da potentiell die Viskosität beeinflussende - Erwärmung zu verhindern, ist ein solches "Konstanthalten" zweckmäßig. Die Messanordnung umfasst aus diesem Grund also entsprechend vorzugsweise eine zumindest der Düse zugeordnete Temperiereinrichtung. Beispielsweise ist diese Temperiereinrichtung als Flüssig-Temperiereinrichtung ausgebildet, so dass das entsprechende Temperierfluid auch eine gewisse "Kühlfunktion" übernehmen kann.

Weiter zweckmäßig wird auch ein der Düse vorgelagertes Fluidreservoir auf einen weiteren, vorzugsweise den gleichen, Zieltemperaturwert temperiert. In letzterem Fall ist die vorstehend beschriebene Temperiereinrichtung auch zur Temperierung des Fluidreservoirs eingerichtet und vorgesehen. Beispielsweise handelt es sich bei dem Fluidreservoir um einen Behälter, in dem das Fluid vorgehalten oder - insbesondere im Fall der Untersuchung von Schmelzen - aufgeschmolzen wird.

Außerdem ermöglicht die Temperierung der Düse und insbesondere auch des Fluidreservoirs eine Ermittlung der Fließeigenschaft in Abhängigkeit der Temperatur. In diesem Fall wird optional das hier und im Folgenden beschriebene Verfahren wiederholt bei unterschiedlichen Zieltemperaturwerten durchgeführt.

Weiter vorzugsweise wird die Vorschubgeschwindigkeit, konkret also der Vorschubgeschwindigkeitswert, für die Relativbewegung zwischen Düse und Substrat konstant gewählt.

In einer weiteren bevorzugten Verfahrensvariante werden als Parameter (oder Größen) der Kontur eine Trajektorie (d. h. die Kurve des Fluidstrangs zwischen Düse und Auflagepunkt auf dem Substrat) sowie ein Durchmesser des Fluidstrangs zwischen der Düse und dem Substrat erfasst. Beispielsweise wird die Trajektorie durch ein an die optisch erfasste Kurve gefittetes Polynom oder eine vergleichbare, insbesondere monoton steigende (vorzugsweise bei Betrachtung der Trajektorie vom Substrat in Richtung zur Düse) Funktion angenähert, das bzw. die vorzugsweise die Kurve in kartesischen Koordinaten beschreibt. Optional werden zur Beschreibung der Trajektorie auch Winkel (insbesondere trigonometrische Funktionen von diesen) gegen eine Achse, bspw. gegen die vorzugsweise als x-Achse geführte Horizontale, herangezogen. Insbesondere können die vorstehend genannten Funktionen auch ineinander umgerechnet werden. Der Durchmesser des Fluidstrangs (auch: "Strangdurchmesser") wird vorzugsweise in Abhängigkeit der Position entlang des Fluidstrangs beschrieben, optional in kartesischen Koordinaten, insbesondere aber entlang einer "Konturkoordinate" (oder auch: "Bogenkoordinate") des Fluidstrangs. Der Koordinatenursprung dieser Konturkoordinate wird dabei zweckmäßigerweise auf die Düsenspitze (auch: das Austrittsende der Düse) gelegt. Alternativ kann dieser Koordinatenursprung aber auch auf den Berührungspunkt des Fluidstrangs mit dem Substrat gelegt werden.

Vorzugsweise wird zu jedem Punkt der Trajektorie eine entsprechende Position in der Konturkoordinate angegeben. Des Weiteren wird vorzugsweise an jeder Position entlang des Fluidstranges der Winkel der Trajektorie, insbesondere der Tangente der Trajektorie, gegen die x-Achse, insbesondere gegen die Horizontale, ermittelt und als Funktion der Konturkoordinate angegeben.

Die vorstehend beschriebene Kontur wird also insbesondere durch den Durchmesser und/oder die Trajektorie beschrieben. Beide Größen werden dabei durch die Dehnviskosität beeinflusst. Aufgrund der Vorschubgeschwindigkeit und der damit einhergehenden Dehnung des Fluidstrangs erfolgt eine viskositätsabhängige Verjüngung des Fluidstrangs nach dessen Austritt aus der Düse sowie ein mehr oder weniger starkes "Durchhängen" des Fluidstrangs zwischen Düse und Substrat. Durch die Trajektorie und die Verjüngung, konkret den (über die Länge veränderlichen) Durchmesser des Fluidstrangs, wird also die Kontur des Fluidstrangs beschrieben. Erkanntermaßen sind diese Größen optisch zugänglich und können somit vergleichsweise einfach vermessen oder erfasst werden.

Optional werden der Durchmesser des Fluidstrangs sowie auch der Verlauf der Trajektorie zu einem (insbesondere vorgegebenen) Zeitpunkt, bspw. 10 bis 20 Sekunden nach Start der Extrusion, erfasst. Dadurch kann ein zumindest quasi-stationärer Zustand abgewartet werden, in dem sich die gesamte Trajektorie und der Verlauf des Durchmessers zumindest innerhalb vernachlässigbarer Grenzen "stabil" bleiben. Gleichermaßen ist aber auch eine fortlaufende optische Erfassung ebenfalls möglich, aus der insbesondere wiederum der stationäre Zustand durch Vergleich des Durchmessers bzw. der Trajektorie zu unterschiedlichen Zeitpunkten abgeleitet werden kann.

Die Dehnviskosität (oder auch: scheinbare Dehnviskosität) in Abhängigkeit der Dehnrate wird dabei vorzugsweise anhand von folgender Formel ermittelt:

$$\eta_e(\dot{\varepsilon}) = \frac{\rho \cdot g}{\dfrac{d\alpha(s)}{ds} \cdot \dfrac{dv(s)}{ds}} \cdot \cos(\alpha(s))$$

$$(1)$$

Dabei stehen

$\rho$ für die Dichte des Fluids,

g für die Erdbeschleunigung,

v(s) für die lokale Geschwindigkeit in Abhängigkeit der Konturkoordinate $s$,

$\dot{\varepsilon} = \dfrac{dv(s)}{ds}$ für die Dehnrate in Abhängigkeit der Konturkoordinate $s$ (d. h. entlang der Trajektorie des Fluidstrangs), konkret in Form der Ableitung der Geschwindigkeit nach der Konturkoordinate $s$,

$\alpha(s)$ für den lokalen Winkel der Trajektorie gegen die Horizontale in Abhängigkeit der Konturkoordinate $s$,

$\dfrac{d\alpha(s)}{ds}$ für die 1. Ableitung des Winkels $\alpha(s)$ nach der Konturkoordinate $s$.

Die lokale Geschwindigkeit wird zweckmäßigerweise anhand das Durchmessers des Fluidstrangs ermittelt, der wiederum hierfür vorzugsweise als lokal hinreichend rund angenommen wird. Für den (lokalen) Volumenstrom (oder auch: "Durchsatz") an einer beliebigen Stelle entlang des Fluidstrangs gilt somit:

$$Q = \pi \left(\frac{d(s)}{2}\right)^2 v(s)$$

$$(2)$$

Dabei steht

*d(s)* für den Durchmesser des Fluidstrangs in Abhängigkeit der Konturkoordinate *s*.

Der Verlauf des Durchmessers des Fluidstrangs (und damit analog auch der Verlauf der Geschwindigkeit) wird bevorzugt angenähert ("gefittet") durch eine Funktion der Gestalt:

$$d(s) = \sum_{1}^{n} A_i \cdot e^{-a_i \cdot s} + A_0$$

$$(3)$$

Dabei stehen

$a_i$ für Fitparameter, die unterschiedlich in ihrem zulässigen numerischen Bereich zu wählen sind,
$A_i$ ebenfalls für anpassbare Parameter.

Hierbei wird optional die Anzahl n schrittweise erhöht, um eine ausreichend gute Anpassung zu erhalten, wobei die Fitparameter $a_i$ unterschiedlich in ihrem zulässigen numerischen Bereich zu wählen sind.
Bevorzugt folgen die Fitparameter $a_i$ folgender Rekursionsformel:

$$a_{i+1} = \frac{a_i}{p}$$

$$(4)$$

wobei p insbesondere ganzzahlig zwischen 1 und 10 gewählt wird.
Vorzugsweise werden die vorstehend genannten Fitparameter $a_i$ und/oder anpassbaren Parameter $A_i$ derart gewählt, dass ein Regressionskoeffizient ("$R^2$") in einem Bereich zwischen zweckmäßigerweise 0,98 und 1 (d. h. insbesondere zwischen 98 und 100 Prozent), vorzugsweise zwischen 0,99 und 1 (also insbesondere zwischen 99 und 100 Prozent) liegt.
Da der Volumenstrom bekannt, insbesondere vorgegeben, ist, vorzugsweise während eines Versuchsdurchlaufs konstant gehalten wird, und entlang des Fluidstrangs konstant ist, folgt aus Gleichung (2):

$$v(s) = \frac{Q}{\pi \left(\frac{d(s)}{2}\right)^2}$$

$$(5)$$

Zweckmäßigerweise wird bei der Bestimmung der Dehnviskosität auch die Oberflächenspannung berücksichtigt. Dies führt zu folgender Formel:

$$\eta_e(\dot{\varepsilon}) = \left(\left(\frac{d\alpha(s)}{ds}\right)^{-1} \cdot \rho \cdot g \cdot \cos\big(\alpha(s)\big) - 2\gamma \cdot \frac{1}{d(s)}\right) \cdot \left(\frac{dv(s)}{ds}\right)^{-1} \tag{6}$$

Dabei steht

$\gamma$ für die Oberflächenspannung.

Für den Fall vergleichsweise sehr hoher Werte der Dehnviskosität kann es dazu kommen, dass der Fluidstrang näherungsweise eine geradlinige Trajektorie zwischen der Düse und dem Substrat aufweist. Dies erschwert die vorstehend beschriebene Analyse. Dieser Effekt beruht darauf, dass die Schwerkraft im Vergleich zu den viskosen Kräften innerhalb des Fluids zu klein wird, um ein Durchhängen, d. h. insbesondere eine nicht-geradlinige Trajektorie, des Fluidstrangs zu bewirken. In einer vorteilhaften und auch für sich eigenständigen, erfinderischen Verfahrensvariante wird deshalb zusätzlich zur Schwerkraft eine weitere, vorzugweise vertikale Kraftkomponente auf den Fluidstrang aufgebracht. In einer optionalen Variante wird dazu ein in Richtung von der Düse auf das Substrat gerichteter Luftstrom auf den Fluidstrang "geblasen". Vorzugsweise wird aber eine elektrische Spannung zwischen der Düse (oder einer dazu im Bereich der Düse, vorzugsweise oberhalb dieser, angeordneten Elektrode) und dem Substrat angelegt.

Diese elektrische Spannung, konkret das dadurch hervorgerufene elektrische Feld, führt zu einer künstlichen Erhöhung der Schwerkraft:

$$\eta_e(\dot{\varepsilon}) = \left(\left(\frac{d\alpha(s)}{ds}\right)^{-1} \cdot \rho \cdot (g + k \cdot U) \cdot \cos\big(\alpha(s)\big) - 2\gamma \cdot \frac{1}{d(s)}\right) \cdot \left(\frac{dv(s)}{ds}\right)^{-1} \tag{7}$$

Dabei stehen

$U$ für die angelegte elektrische Spannung,

$k$ für eine geometrieabhängige (insbesondere von der Geometrie der Elektroden für das Anlegen der Spannung), zu kalibrierende Konstante.

Die Konstante $k$ wird zweckmäßigerweise durch Vergleichsmessungen an Systemen (d. h. insbesondere Fluiden) mit bekannter Dehnviskosität kalibriert. Beispielsweise wird dabei eine elektrische Spannung aufgebracht, die dadurch hervorgerufene Dehnrate ermittelt (insbesondere durch Vermessung des Strangdurchmessers) und anschließend aufgrund des für das vorliegende Vergleichssystem bekannten Zusammenhangs zwischen Dehnrate und Dehnviskosität auf die Konstante $k$ zurückgerechnet.

Vorteilhafterweise ermöglicht eine wie vorstehend beschrieben angelegte elektrische Spannung auch die Vorgabe (d. h. Einstellung und Verwendung) eines vergleichsweise geringen (Wertes des) Volumenstroms, so dass ein ebenfalls verringerter Durchmesser des Fluidstrangs auftritt. Ohne die zusätzliche Kraftkomponente würde ein solch geringer Volumenstrom aufgrund sogenannter Raleigh-Plateux Instabilitäten verhindert werden. Somit können durch Anlegen der elektrischen Spannung die Bedingungen, unter denen die vorliegend beschriebene Ermittlung der Fließeigenschaften durchgeführt werden kann, ausgeweitet werden. Außerdem führt diese Spannung vorteilhafterweise auch zu einer Stabilisierung der Extrusion, bspw. indem sogenannte Stick-Slip-Effekte verhindert werden können.

Da sich die Dehnrate ebenfalls entlang der Konturkoordinate verändert, können anhand der optischen Vermessung quasi beliebig viele Werte der Dehnviskosität und der Dehnrate ermittelt werden, insbesondere in Abhängigkeit der Wahl des Volumenstroms und/oder der Vorschubgeschwindigkeit.

In einer zweckmäßigen Verfahrensvariante wird die optische Vermessung mittels wenigstens einer Kamera, insbesondere einer (handelsüblichen) Digitalkamera, optional auch einer Messkamera, vorgenommen. Entsprechend umfasst die Messanordnung als optische Erfassungseinheit eine solche (Digital-) Kamera. Vorzugsweise ist die Kamera mit ihrer Blickrichtung dabei senkrecht zur Vorschubrichtung und insbesondere auch senkrecht zur Achse der Düse (also der Achse der Düsenöffnung) ausgerichtet. Die Blickrichtung der Kamera ist somit zweckmäßigerweise senkrecht zu der Ebene ausgerichtet, in der sich die Trajektorie des Fluidstrangs ausbildet. Vorzugsweise erfolgt die Erfassung der Kontur mittels Bildauswertungsverfahren. Die Vermessung des Fluidstrangs erfolgt insbesondere im Fall der Digitalkamera zweckmäßigerweise durch Vergleich mit den bekannten Abmessungen der Düse, insbesondere deren "Düsenspitze", die in diesem Fall einen Bildmaßstab bilden.

In einer bevorzugten Ausführung der Messanordnung ist die Düse, insbesondere mit ihrer Achse (die mithin die Austrittsrichtung des Fluids an der Düse beschreibt) senkrecht zum Substrat ausgerichtet. Das Substrat ist zweckmäßigerweise im bestimmungsgemäßen Betrieb horizontal ausgerichtet. Somit steht die (Düsen-) Achse im bestimmungsgemäßen Betrieb vorzugsweise parallel zur Richtung der Schwerkraft.

In einer Variante ist die Kamera ortsfest gegenüber der Düse und/oder gegebenenfalls dem Substrat angeordnet. Die Düse (bzw. optional das Substrat) bewegt sich mithin an der Kamera vorbei. In diesem Fall ist der Öffnungswinkel der Kamera sowie deren Schärfentiefebereich derart gewählt, dass über die vollständige Bewegungsstrecke der Düse während der Durchführung des Verfahrens die Düse und der Fluidstrang scharf erfasst werden können.

In einer alternativen Variante wird die Kamera gleichlaufend mit der Düse bzw. ggf. dem Substrat bewegt. Beispielsweise ist die Kamera dabei mittels eines Trägers mit der Düse, insbesondere einer diese tragenden Struktur, gekoppelt. Dies hat den Vorteil, dass stets der gleiche Maßstab vorliegt und die Düse, die vorzugsweise in einer Fokusebene der Kamera liegt, über den gesamten Vorgang in dieser Fokusebene verbleibt, mithin nicht aus dieser bewegt wird.

Um weitere Eigenschaften des Fluids ermitteln zu können, wird in einer vorteilhaften Verfahrensvariante, optional zeitgleich zur optischen Erfassung der Trajektorie und des Durchmessers des Fluidstrangs, ein Spreiten des auf dem Substrat abgelegten Fluidstrangs optisch erfasst. Anhand des zeitlichen Verlaufs des Spreitens wird in dieser Variante dann insbesondere auf eine Benetzungsfähigkeit (bspw. angegeben durch einen Benetzungswinkel) und/oder eine Scherviskosität des Fluids geschlossen. Vorzugsweise umfasst die Messanordnung hierzu eine weitere optische Erfassungseinheit, insbesondere in Form einer weiteren Kamera. Beispielsweise ist diese mit ihrer Blickrichtung senkrecht auf das Substrat, insbesondere auf den Bereich, in dem der Fluidstrang abgelegt wird, angeordnet.

Insbesondere wird hierzu der "abgelegte" Fluidstrang, zweckmäßigerweise dessen "Durchmesser", konkret dessen Breite quer zur Vorschubrichtung, optisch vermessen. Da das Spreiten des Fluidstrangs ein zeitlich vergleichsweise langsamer Vorgang ist, wird der Fluidstrang dabei über einen vergleichsweise langen Zeitraum (vorzugsweise wenigstens 5 bis etwa 30 Sekunden) beobachtet und somit vermessen. Die erfassten Werte werden dabei in folgender Formel verrechnet:

$$a(t) = a_S - \Delta a \cdot e^{-b\frac{t}{\eta}}$$

$$(8)$$

Dabei stehen

$a(t)$    für den Durchmesser bzw. die Breite des abgelegten Fluidstrangs in Abhängigkeit der Zeit,
$a_S$    für den Durchmesser bzw. die Breite des abgelegten Fluidstrangs im stationären (d. h. vollständig gespreiteten) Zustand,
$b$    für einen zu kalibrierenden Parameter,
$\eta$    für die (Scher-) Viskosität,
$\Delta a$    für einen Fitparameter, der nach der Kalibrierung von $b$ an $a(t)$ angepasst werden kann.

Vorzugsweise wird hierbei eingeführt:

$$a(t) = a_S - \Delta a \cdot e^{-\frac{t}{\tau}}$$

$$(9)$$

wobei

$$\frac{1}{\tau} = + \frac{4}{a_S{}^3} \frac{\chi}{\lambda\eta} A \cdot g$$

$$(10)$$

Dabei stehen

$\chi$    für das Verhältnis von Volumenstrom und Vorschubgeschwindigkeit,
$\lambda$    für eine zu bestimmende, insbesondere universelle Konstante,

-A für eine Spreitkonstante, die durch die Oberflächenspannung des Substrats abzüglich der Oberflächenspannung des Fluids und abzüglich der Grenzflächenspannung zwischen Substrat und Fluid bestimmt wird,

$\tau$ für eine Zeitkonstante, die, insbesondere die als charakteristische Größe, das zeitliche Spreitverhalten beschreibt.

Auch hier werden die vorstehend genannten, zu kalibrierenden Parameter oder auch die vorstehend genannte Konstante $\lambda$ insbesondere mittels Vergleichsmessungen an einem bekannten System, vorzugsweise einem Fluid ermittelt oder kalibriert. Beispielsweise wird hierzu das Spreiten eines Fluids mit gleicher Spreitkonstante aber unterschiedlicher Viskosität vermessen. Bei einem hierbei eingesetzten Fluid handelt es sich beispielsweise um ein kommerziell verfügbares Silikonöl. Beispielhaft wird hierzu auf Härth, M., Schubert, D.W. (2012). Simple Approach for Spreading Dynamics of Polymeric Fluids. Macromolecular Chemistry and Physics, 213(6), 654-665. https://dx.doi.org/10.1002/macp.201100631 verwiesen.

In einer weiteren zweckmäßigen Verfahrensvariante wird das vorstehend beschriebene Verfahren, zumindest insbesondere das Extrudieren und Ablegen des Fluidstrangs innerhalb eines temperierten Gehäuses durchgeführt. Die Messanordnung weist hierzu zweckmäßigerweise dieses temperierte Gehäuse auf. Vorzugsweise schließt dieses Gehäuse die Düse und das Substrat ein. Unter dem temperierten Gehäuse wird dabei ein Gehäuse mit einem temperierten, d. h. im bestimmungsgemäßen Betrieb auf einen vorzugsweise variabel vorgebbaren Temperaturwert temperierbaren, Gehäuseinnenraum verstanden. Die Messanordnung umfasst hierbei konkret das Gehäuse sowie eine diesem zugeordnete Temperiereinheit, bspw. eine Art Heizlüfter, die dazu eingerichtet ist, den Gehäuseinnenraum auf den Temperaturwert zu erwärmen und zu halten. Die Nutzung des temperierten Gehäuses hat dabei den Vorteil, dass eine möglichst verarbeitungsnahe Bestimmung der Fluideigenschaft (oder gegebenenfalls mehreren Fluideigenschaften) ermöglicht wird. Denn im Fall eines 3D-Drucks ist teilweise in Abhängigkeit von dem zu verarbeitenden Material der "Druckraum" - also der Gehäuseinnenraum - ebenfalls temperiert, um eine zu schnelle Abkühlung des Fluidstrangs zu unterbinden.

In einer bevorzugten Ausgestaltung wird der vorstehend beschriebene Temperaturwert für das Gehäuse gleich dem Zieltemperaturwert für die Düse und insbesondere auch dem für das Fluidreservoir gesetzt.

In einer alternativen Variante wird der Temperaturwert für das Gehäuse abweichend zu dem oder dem jeweiligen Zieltemperaturwert der Düse bzw. des Fluidreservoirs gewählt. Dadurch kann ein Temperaturgradient im Fluidstrang hervorgerufen werden und bspw. die entsprechende Fließeigenschaft unter Verarbeitungsbedingungen, bspw. während eines 3D-Druckprozesses, ermittelt werden. Bei der Untersuchung von thermoplastischen Schmelzen werden in dieser Variante die jeweiligen (Ziel-) Temperaturwerte optional entsprechend zu für Spritzgießprozesse empfohlenen Werten gewählt.

In einer optionalen Verfahrensvariante wird das Gehäuse mit einem Schutzgas geflutet oder unter Unterdruck gesetzt, d. h. vorzugsweise (zumindest teilweise, bspw. im Sinne eines Grob- oder auch Feinvakuums) evakuiert. Dadurch können gegebenenfalls auf das Fluid einwirkende und dieses gegebenenfalls schädigende Einflüsse wie Oxidationsprozesse oder dergleichen vermieden oder wenigstens verringert werden. Hierzu ist das Gehäuse vorzugsweise für den bestimmungsgemäßen Betrieb fluiddicht und/oder zumindest für ein Grob- oder auch Feinvakuum vakuumdicht verschließbar.

In einer weiteren optionalen Verfahrensvariante wird zur Auswertung der Messdaten, insbesondere der optisch erfassten Daten eine künstliche Intelligenz, bspw. ein Machine-Learning-Algorithmus, ein neuronales Netz oder dergleichen herangezogen. Vorzugsweise wird die künstliche Intelligenz dazu genutzt, um, insbesondere automatisch, Korrelationen zwischen dehnrheologischen Eigenschaften und dem Spreit-Verhalten des Fluids zu ermitteln.

Weiter optional werden die erfassten sowie die berechneten Daten, insbesondere also die Werte für die Dehnviskosität in einer (vorzugsweise online zur Verfügung gestellten) Datenbank gespeichert, so dass diese für eine spätere Verarbeitung und/oder Auswertung einfach zur Verfügung stehen.

Alternativ zum vorstehend beschriebenen Einsatz eines 3D-Druckers, der insbesondere um die Kamera und eine entsprechende Analysesoftware erweitert ist, ist in einer ebenfalls zweckmäßigen Ausführung die Messanordnung als "reines" (im Sinne von eigenständiges) Messgerät ausgebildet.

Nachfolgend werden Ausführungsbeispiele der Erfindung anhand einer Zeichnung näher erläutert. Darin zeigen:

Fig. 1    in einer Seitenansicht schematisch eine Messanordnung zum Ermitteln einer Fließeigenschaft eines Fluids,

Fig. 2    in einem schematischen Blockdiagramm ein mittels der Messanordnung durchgeführtes Verfahren zum Ermitteln der Fließeigenschaft,

Fig. 3    in einer Detaildarstellung III gemäß Fig. 1 eine Düse der Messanordnung sowie einen mittels der Düse extrudierten Fluidstrang, und

Fig. 4    in einem perspektivischen Teilausschnitt schematisch eine Erweiterung der Messanordnung gemäß eines weiteren Ausführungsbeispiels.

Einander entsprechende Teile und Größen sind in allen Figuren stets mit gleichen Bezugszeichen versehen.

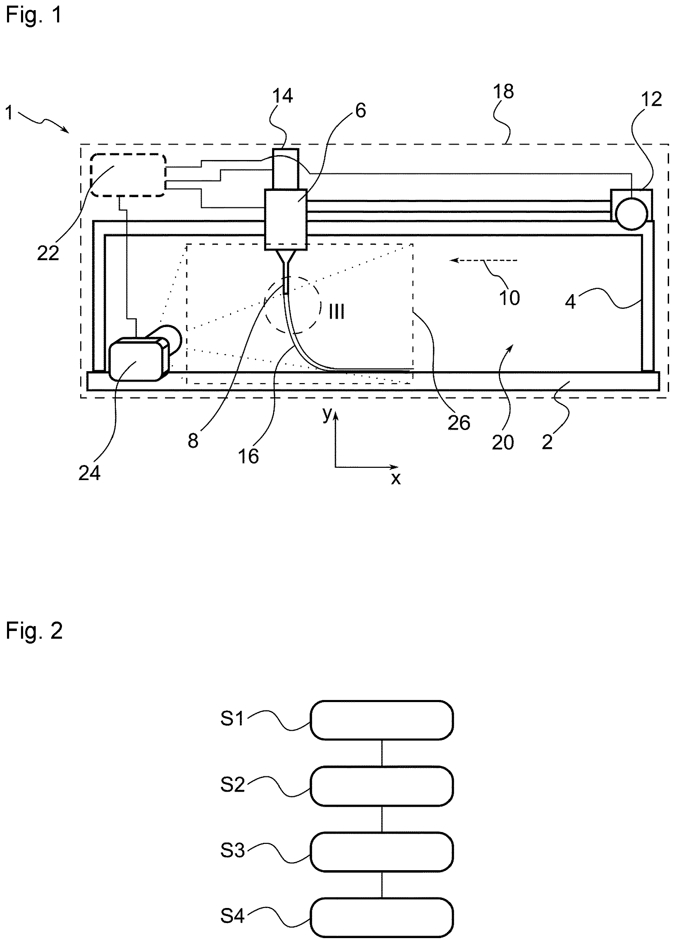

In Fig. 1 ist schematisch eine Messanordnung, im Folgenden kurz als "Messgerät 1" bezeichnet, dargestellt, das dazu eingerichtet und vorgesehen ist, für die Ermittlung einer Fließeigenschaft eines Fluids eingesetzt zu werden. Das Messgerät 1 weist einen Gerätetisch 2 auf, der ein nicht näher dargestelltes Substrat trägt. Des Weiteren weist das Messgerät 1 ein portalartiges Gestell 4 auf, an dem ein Fluidreservoir 6 sowie eine an das Fluidreservoir 6 angeschlossene Düse 8 zumindest in eine Vorschubrichtung 10 verschiebbar gehaltert ist. Zum Verschieben des Fluidreservoirs 6 und der Düse 8 umfasst das Messgerät 1 auch eine Vorschubeinrichtung, hier in Form eines Antriebs 12, der einen Elektromotor, ein nachgeordnetes Getriebe sowie einen Riementrieb zu Kraftübertragung auf die das Fluidreservoir 6 und die Düse 8 umfassende Baugruppe aufweist. Des Weiteren umfasst das Messgerät 1 eine Fördereinrichtung 14, die dazu eingerichtet ist, das Fluid aus dem Fluidreservoir 6 durch die Düse 8 zu fördern und somit einen Fluidstrang 16 zu extrudieren. Das Substrat dient dabei als Ablagefläche für den Fluidstrang 16.

Bei der Fördereinrichtung 14 handelt es sich beispielsweise - insbesondere abhängig von dem zu untersuchenden Fluid - um eine Pumpe, einen Schubkolben, der das Fluid aus dem Fluidreservoir 6 verdrängt, oder dergleichen. Für den Fall, dass als Fluid eine Kunststoffschmelze verwendet wird, ist die Pumpe bspw. als Schmelzepumpe ausgebildet.

Das Fluidreservoir 6 und in nicht dargestellter Weise auch die Düse 8 umfassen eine Temperiereinrichtung, die dazu dient, das Fluid auf einen Zieltemperaturwert zu temperieren. Optional ist eine gemeinsame Temperiereinrichtung vorgesehen, mittels derer im bestimmungsgemäßen Betrieb das Fluidreservoir 6 und die Düse 8 auf den gleichen Zieltemperaturwert temperiert werden. In einem alternativen Ausführungsbeispiel weisen das Fluidreservoir 6 und die Düse 8 jeweils voneinander separate Temperiereinrichtungen - bspw. elektrische Heizelemente oder Fluid-Heizelemente, insbesondere Heizmanschetten, integrierte Heizrohre oder dergleichen - auf.

Das Messgerät 1 weist außerdem auch ein Gehäuse 18 auf, das den Gerätetisch 2, das Gestell 4, sowie im dargestellten Ausführungsbeispiel auch die Düse 8, das Fluidreservoir 6 sowie die Fördereinrichtung 14 umhaust. Das Messgerät 1 weist außerdem ein nicht dargestelltes Temperiersystem auf, das dazu dient, den vom Gehäuse 18 umhausten Gehäuseinnenraum 20 auf einen Zieltemperaturwert zu temperieren.

Außerdem weist das Messgerät 1 einen Controller 22 auf, der dazu eingerichtet ist, die Temperiereinrichtungen des Fluidreservoirs 6, der Düse 8, das Temperiersystem für das Gehäuse 18, den Antrieb 12 und die Fördereinrichtung 14 anzusteuern. Bspw. ist der Controller 22 Teil eines (optional Industrie-) PCs.

Um die Fließeigenschaft ermitteln zu können, weist das Messgerät 1 außerdem eine optische Erfassungseinheit in Form einer (Digital-) Kamera 24 auf. Im dargestellten Ausführungsbeispiel ist die Kamera 24 ortsfest angeordnet. Die Kamera 24 ist dabei mit ihrer Blickrichtung senkrecht zu einer Düsenachse sowie zur Vorschubrichtung 10 ausgerichtet. Des Weiteren ist die Kamera 24 so ausgerichtet, dass ihr optischer Erfassungsbereich 26 zumindest die Düsenspitze der Düse 8 und einen Teil des unterhalb der Düse 8 liegenden Substrats einschließt. Dadurch kann der extrudierte Fluidstrang 16 von der Kamera 24 zwischen Düse 8 und Substrat erfasst werden.

Der Controller 22 ist dazu eingerichtet, zur Ermittlung der Fließeigenschaft ein im Folgenden unter anderem anhand von Fig. 2 näher beschriebenes Verfahren durchzuführen. Das Verfahren wird hier beispielhaft für einen Kunststoff, konkret eine Kunststoffschmelze als Fluid erläutert.

In einem ersten Verfahrensschritt S1 steuert der Controller 22 die Temperiereinrichtung des mit dem Kunststoff befüllten Fluidreservoirs 6 und der Düse 8 an, auf einen Zieltemperaturwert, der oberhalb des Schmelztemperaturwerts des Kunststoffs liegt an. Ebenfalls steuert der Controller 22 das Temperiersystem für das Gehäuse 18 an, den Gehäuseinnenraum 20 auf einen weiteren Zieltemperaturwert , der in der vorliegenden Variante gleich dem Zieltemperaturwert der Düse 8 gesetzt ist (bei einem Polyamid bspw. bei etwa 240 Grad Celsius), aufzuheizen.

In einem zweiten Verfahrensschritt S2 steuert der Controller 22 die Fördereinrichtung 14 an, den aufgeschmolzenen Kunststoff mit einem konstanten Volumenstrom aus dem Fluidreservoir 6 durch die Düse 8 zu pressen und so den Fluidstrang 16 zu extrudieren. Der Controller 22 steuert auch den Antrieb 12 derart an, dass das Fluidreservoir 6 mit der Düse 8 mit einem konstanten und vorgegebenen Vorschubgeschwindigkeitswert relativ zu dem Gerätetisch 2 und somit dem Substrat verschoben wird. Damit wird der Fluidstrang 16 nach Kontakt zu dem Substrat seitlich abgelenkt und - aufgrund entsprechend hoher Wahl des Vorschubgeschwindigkeitswerts - von der Düse 8 abgezogen. Dadurch stellt sich eine Trajektorie y(x), d. h. Kurve, des Fluidstrangs 16 ein, die in Vorschubrichtung 10 gewölbt oder gebogen zwischen der Düse 8 und dem Substrat verläuft. Außerdem verjüngt sich der Fluidstrang 16 mit zunehmendem Abstand von der Düse 8. Die Verjüngung ist dabei abhängig von der Vorschubgeschwindigkeit, die damit eine Art Abzugsgeschwindigkeit des Fluidstrangs 16 von der Düse 8 darstellt, und der Viskosität, insbesondere der Dehnviskosität. Auch die Form der Trajektorie y(x) ist von diesen beiden Größen abhängig, da ein vergleichsweise dünnflüssiges Material (hier also eine niederviskose Schmelze) schnell von der Düse 8 abfließen und somit erst kurz vor dem Substrat mit einem vergleichsweise engen Radius in Richtung der Horizontalen gebogen wird.

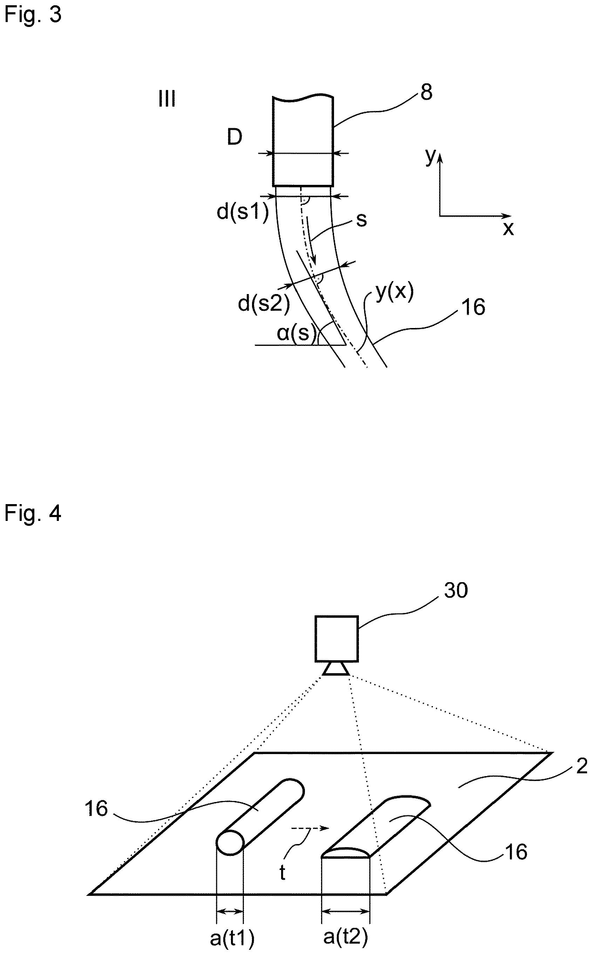

In einem dritten Verfahrensschritt S3 erfasst der Controller 22 deshalb optisch mittels der Kamera 24 den Verlauf, also die Trajektorie y(x) des Fluidstrangs 16. Die Trajektorie y(x) wird optional in einem kartesischen Koordinatensystem abgebildet und deren Verlauf durch ein Polynom "gefittet". Daraus leitet der Controller 22 eine "Konturkoordinate s" ab, mittels derer die Position aller Punkte einer "neutralen Faser" (mithin also der Trajektorie y(x)) des Fluidstrangs 16 entlang seiner Längserstreckung beschrieben werden kann. Außerdem bestimmt der Controller 22 einen Durchmesser d(s) des Fluidstrangs 16 entlang seiner Längserstreckung, somit in Abhängigkeit von der Konturkoordinate s (s. in Fig. 3 bspw. d(s1) und d(s2)). Alternativ zur vorstehend beschriebenen Nutzung des Polynoms verwendet der Controller eine monoton steigende (vorzugsweise bei Betrachtung der Trajektorie y(x) vom Substrat in Richtung zur Düse) Funktion zur Annäherung der Trajektorie y(x). Optional werden zur Beschreibung der Trajektorie y(x) auch trigonometrische Funktionen herangezogen.

Der Controller 22 nutzt zur Vermessung des Durchmessers d(s) des Fluidstrangs 16 dabei die Kenntnis des Durchmessers D der Düse 8. Der (Düsen-) Durchmesser D dient somit als Maßstab für den Controller 22.

Außerdem ermittelt der Controller 22 den Verlauf des Winkels α(s) zwischen der Trajektorie y(x), konkret einer Tangente der Trajektorie y(x), und der Horizontalen entlang der Konturkoordinate s.

Anschließend berechnet der Controller 22 in einem vierten Verfahrensschritt S4 die Dehnviskosität der Kunststoffschmelze, d. h. deren Istwert, aus dem Verlauf des Durchmessers d(s), dem Volumenstrom, der (bekannten) Dichte des Fluids, der Erdbeschleunigung, dem Winkels α(s), der Form der Trajektorie y(x) sowie der Oberflächenspannung anhand der vorstehend beschriebenen Formeln (1) bis (6).

In einem optionalen Ausführungsbeispiel, das das vorstehend beschriebene Ausführungsbeispiel erweitert, umfasst das Messgerät 1 eine zusätzliche optische Erfassungseinheit, konkret eine weitere Kamera 30 (s. Fig. 4). Diese Kamera 30 ist dabei mit Blickrichtung senkrecht zum Gerätetisch 2 und somit zum Substrat angeordnet. Der Erfassungsbereich der Kamera 30 ist so gewählt, dass der Fluidstrang 16, wenn er auf dem Substrat abgelegt ist, erfasst werden kann. Der Controller 22 erfasst mittels der Kamera 30 den Strangdurchmesser a(t) des abgelegten Fluidstrangs 16 über einen Zeitraum t - in Fig. 4 schematisch dargestellt anhand des Fluidstrangs 16 zu zwei Zeitpunkten t1 und t2. Aus dem zeitlichen Verlauf des Strangdurchmessers a(t) kann anhand der vorstehend genannten Formeln (7) bis (10) auf das Spreiten des Fluidstrangs 16 und somit der Kunststoffschmelze auf dem Substrat geschlossen werden. Dies gibt wiederum Aufschluss über das Benetzungsverhalten der Kunststoffschmelze sowie über deren Scherviskosität.

In einem optionalen Ausführungsbeispiel ist das Messgerät 1 ein eigenständiges Gerät zur Untersuchung der Dehnviskosität, optional auch der Scherviskosität und des Benetzungsverhaltens.

In einem alternativen Ausführungsbeispiel handelt es sich bei dem Messgerät 1 um einen 3D-Drucker, der um die Kamera 24, optional auch um die Kamera 30, und dessen Steuergerät durch Installation einer das vorstehend beschriebene Verfahren als Code enthaltenden Analysesoftware zum Controller 22 erweitert sind. Der Gegenstand der Erfindung ist nicht auf die vorstehend beschriebenen Ausführungsbeispiele beschränkt.

Bezugszeichenliste

1 Messgerät
2 Gerätetisch
4 Gestell
6 Fluidreservoir
8 Düse
10 Vorschubrichtung
12 Antrieb
14 Fördereinrichtung
16 Fluidstrang
18 Gehäuse
20 Gehäuseinnenraum
22 Controller
24 Digitalkamera
26 Erfassungsbereich
30 Kamera

S1-S4 Verfahrensschritte
d(s) Durchmesser
D Durchmesser
a(t) Strangdurchmesser des abgelegten Fluidstrangs
s Konturkoordinate
t Zeitraum
y(x) Trajektorie
α(s) Winkel

**Patentansprüche**

1. Verfahren zum Ermitteln einer Fließeigenschaften eines Fluids, wobei verfahrensgemäß

   - das Fluid mit einem konstanten Volumenstrom durch eine Düse (8) gefördert wird,
   - der dabei erzeugte Fluidstrang (16) auf einem Substrat abgelegt wird,
   - eine Relativbewegung zwischen Düse (8) und Substrat unter einem Vorschubgeschwindigkeitswert erfolgt,
   - eine Kontur des Fluidstrangs (16) zwischen Düse (8) und Substrat optisch vermessen wird,

   **dadurch gekennzeichnet, dass**

   - aus der Kenntnis des Volumenstroms, des Vorschubgeschwindigkeitswerts und der Kontur des Fluidstrangs (16) eine, insbesondere dehnratenabhängige, Dehnviskosität als Fließeigenschaft berechnet wird.

2. Verfahren nach Anspruch 1,
   wobei die Düse (8) auf einen Zieltemperaturwert temperiert wird, insbesondere wobei auch ein der Düse (8) vorgelagertes Fluidreservoir (6) auf einen, vorzugsweise den gleichen, Zieltemperaturwert temperiert wird.

3. Verfahren nach Anspruch 1 oder 2,
   wobei für die Relativbewegung zwischen Düse (8) und Substrat der Vorschubgeschwindigkeitswert konstant gewählt wird.

4. Verfahren nach einem der Ansprüche 1 bis 3,
   wobei als Parameter der Kontur eine Trajektorie sowie ein Durchmesser (d(s)) des Fluidstrangs (16) zwischen der Düse (8) und dem Substrat erfasst wird.

5. Verfahren nach einem der Ansprüche 1 bis 4,
   wobei die optische Vermessung mittels wenigstens einer Kamera (24) vorgenommen wird, die ortsfest gegenüber der Düse (8) angeordnet ist.

6. Verfahren nach einem der Ansprüche 1 bis 4,
   wobei die optische Vermessung mittels wenigstens einer Kamera (24) vorgenommen wird, die gleichlaufend mit der Düse (8) bewegt wird.

7. Verfahren nach einem der Ansprüche 1 bis 6,
   wobei ein Spreiten des auf dem Substrat abgelegten Fluidstrangs (16) optisch erfasst wird und anhand des zeitlichen Verlaufs des Spreitens auf eine Benetzungsfähigkeit und/oder eine Scherviskosität des Fluids geschlossen wird.

8. Verfahren nach einem der Ansprüche 1 bis 7,
   wobei das Ablegen des Fluidstrangs (16) innerhalb eines temperierten Gehäuses (18) erfolgt.

9. Verfahren nach einem der Ansprüche 1 bis 8,
   wobei das Ablegen des Fluidstrangs (16) innerhalb eines mit Schutzgas gefluteten oder unter Unterdruck gesetzten Gehäuses (18) erfolgt.

10. Verfahren nach einem der Ansprüche 1 bis 9,
    wobei eine elektrische Spannung zur Erzeugung eines elektrischen Felds zwischen der Düse (8) und dem Substrat angelegt wird.

11. Messanordnung (1) zum Ermitteln einer Fließeigenschaft eines Fluids, aufweisend

    - eine Düse (8),
    - eine Fördervorrichtung (14), mittels derer im bestimmungsgemäßen Betrieb das Fluid mit einem konstanten Volumenstrom durch die Düse (8) gefördert wird,
    - ein Substrat, auf dem im bestimmungsgemäßen Betrieb ein von der Düse (8) erzeugter Fluidstrang (16) abgelegt wird,
    - eine Vorschubeinrichtung (12), um eine Relativbewegung zwischen Düse (8) und Substrat unter einem Vorschubgeschwindigkeitswert hervorzurufen,

- eine optische Erfassungseinheit (24) zum Vermessen der Kontur des Fluidstrangs (16) zwischen Düse (8) und Substrat,

**dadurch gekennzeichnet, dass**

- die Messanordnung (1) einen Controller (22) aufweist, der dazu eingerichtet ist, aus der Kenntnis des Volumenstroms, des Vorschubgeschwindigkeitswerts und der Kontur des Fluidstrangs (16) eine, insbesondere dehnratenabhängige, Dehnviskosität als Fließeigenschaft zu berechnen.

**12.** Messanordnung (1) nach Anspruch 11,
wobei die optische Erfassungseinheit durch wenigstens eine Kamera (24) gebildet ist.

**13.** Messanordnung (1) nach Anspruch 11 oder 12,
mit einer weiteren optischen Erfassungseinheit, insbesondere einer weiteren Kamera (30), die dazu eingerichtet und angeordnet ist, ein Spreiten des auf dem Substrat abgelegten Fluidstrangs (16) zu erfassen.

**14.** Messanordnung (1) nach einem der Ansprüche 11 bis 13,
wobei die optische Erfassungseinheit (24), gegebenenfalls auch die weitere optische Erfassungseinheit (30), relativ zu der Düse (8) und dem Substrat ortsfest angeordnet ist.


**Claims**

**1.** Method for determining a rheological property of a fluid, wherein according to the method

- the fluid is conveyed with a constant volume flow rate through a nozzle (8),
- the fluid strand (16) thereby generated is deposited on a substrate,
- a relative movement takes place between the nozzle (8) and the substrate at a forward feed velocity value,
- a contour of the liquid strand (16) between the nozzle (8) and the substrate is optically measured,

**characterized in that**

- an, in particular strain rate-dependent, extensional viscosity as a rheological property is calculated from knowledge of the volume flow rate, the forward feed velocity value and the contour of the liquid strand (16) .

**2.** Method according to Claim 1,
wherein the nozzle (8) is thermally regulated to a target temperature value, in particular wherein a fluid reservoir (6) upstream of the nozzle (8) is also thermally regulated to a target temperature value, which is preferably the same.

**3.** Method according to Claim 1 or 2,
wherein the forward feed velocity value for the relative movement between the nozzle (8) and the substrate is selected to be constant.

**4.** Method according to one of Claims 1 to 3,
wherein a trajectory and a diameter (d(s)) of the fluid strand (16) between the nozzle (8) and the substrate are detected as parameters of the contour.

**5.** Method according to one of Claims 1 to 4,
wherein the optical measurement is carried out by means of at least one camera (24), which is arranged stationary relative to the nozzle (8).

**6.** Method according to one of Claims 1 to 4,
wherein the optical measurement is carried out by means of at least one camera (24), which is moved synchronously with the nozzle (8).

**7.** Method according to one of Claims 1 to 6,
wherein spreading of the fluid strand (16) deposited on the substrate is optically detected, and a wettability and/or a shear viscosity of the fluid is deduced with the aid of the temporal profile of the spreading.

8. Method according to one of Claims 1 to 7,
wherein the depositing of the fluid strand (16) is carried out inside a thermally regulated housing (18).

9. Method according to one of Claims 1 to 8,
wherein the depositing of the fluid strand (16) is carried out inside a housing (18) flooded with protective gas or placed at a reduced pressure.

10. Method according to one of Claims 1 to 9,
wherein an electrical voltage for generating an electric field is applied between the nozzle (8) and the substrate.

11. Measuring arrangement (1) for determining a rheological property of a fluid, comprising

- a nozzle (8),
- a conveyor apparatus (14), by means of which the fluid is conveyed with a constant volume flow rate through the nozzle (8) during normal operation,
- a substrate, on which a fluid strand (16) generated by the nozzle (8) is deposited during normal operation,
- a forward feed device (12) for inducing a relative movement between the nozzle (8) and the substrate at a forward feed velocity value,
- an optical detection unit (24) for measuring the contour of the fluid strand (16) between the nozzle (8) and the substrate,

**characterized in that**

- the measuring arrangement (1) comprises a controller (22), which is adapted to calculate an, in particular strain rate-dependent, extensional viscosity as a rheological property from knowledge of the volume flow rate, the forward feed velocity value and the contour of the liquid strand (16).

12. Measuring arrangement (1) according to Claim 11, wherein the optical detection unit is formed by at least one camera (24).

13. Measuring arrangement (1) according to Claim 11 or 12,
having a further optical detection unit, in particular a further camera (30), which is adapted and arranged to detect spreading of the fluid strand (16) deposited on the substrate.

14. Measuring arrangement (1) according to one of Claims 11 to 13,
wherein the optical detection unit (24), and optionally also the further optical detection unit (30), are arranged stationary relative to the nozzle (8) and the substrate.


**Revendications**

1. Procédé permettant de déterminer une propriété d'écoulement d'un fluide, dans lequel, selon le procédé

- le fluide est refoulé à travers une buse (8) à un débit volumique constant,
- le jet de fluide (16) généré à cette occasion est déposé sur un substrat,
- un mouvement relatif a lieu entre la buse (8) et le substrat selon une valeur de vitesse d'avance,
- un contour du jet de fluide (16) entre la buse (8) et le substrat est mesuré optiquement,

**caractérisé en ce que**

- en connaissant le débit volumique, la valeur de vitesse d'avance et le contour du jet de fluide (16), une viscosité à l'allongement, en particulier dépendant du taux d'allongement, est calculée en tant que propriété d'écoulement.

2. Procédé selon la revendication 1, dans lequel la température de la buse (8) est équilibrée à une valeur de température cible, en particulier dans lequel aussi la température d'un réservoir de fluide (6) placé en amont de la buse (8) est équilibrée à une valeur de température cible, de préférence à la même valeur.

3. Procédé selon la revendication 1 ou 2, dans lequel une valeur de vitesse d'avance constante est choisie pour le mouvement relatif entre la buse (8) et le substrat.

4. Procédé selon l'une quelconque des revendications 1 à 3, dans lequel une trajectoire ainsi qu'un diamètre (d(s)) du jet de fluide (16) entre la buse (8) et le substrat est détecté en tant que paramètre du contour.

5. Procédé selon l'une quelconque des revendications 1 à 4, dans lequel le mesurage optique est effectué au moyen d'au moins une caméra (24) qui est disposée de manière stationnaire par rapport à la buse (8).

6. Procédé selon l'une quelconque des revendications 1 à 4, dans lequel le mesurage optique est effectué au moyen d'au moins une caméra (24) qui est déplacée de manière synchrone avec la buse (8).

7. Procédé selon l'une quelconque des revendications 1 à 6, dans lequel un épanouissement du jet de fluide (16) déposé sur le substrat est détecté optiquement, et une mouillabilité et/ou une viscosité transversale du fluide sont déduites à l'aide de l'évolution dans le temps de l'épanouissement.

8. Procédé selon l'une quelconque des revendications 1 à 7, dans lequel la dépose du jet de fluide (16) est effectuée à l'intérieur d'un boîtier tempéré (18).

9. Procédé selon l'une quelconque des revendications 1 à 8, dans lequel la dépose du jet de fluide (16) est effectuée à l'intérieur d'un boîtier (18) rempli de gaz inerte ou mis en dépression.

10. Procédé selon l'une quelconque des revendications 1 à 9, dans lequel une tension électrique est appliquée pour générer un champ électrique entre la buse (8) et le substrat.

11. Agencement de mesure (1) permettant de déterminer une propriété d'écoulement d'un fluide, présentant

- une buse (8),
- un dispositif de refoulement (14) au moyen duquel, en fonctionnement conforme, le fluide est refoulé à travers la buse (8) à un débit volumique constant,
- un substrat sur lequel un jet de fluide (16) généré par la buse (8) est déposé en fonctionnement conforme,
- un équipement d'avance (12) pour provoquer un mouvement relatif entre la buse (8) et le substrat selon une valeur de vitesse d'avance,
- une unité de détection optique (24) pour mesurer le contour du jet de fluide (16) entre la buse (8) et le substrat,

**caractérisé en ce que**

- l'agencement de mesure (1) présente un contrôleur (22) qui est conçu, en connaissant le débit volumique, la valeur de vitesse d'avance et le contour du jet de fluide (16), pour calculer une viscosité à l'allongement, en particulier dépendant du taux d'allongement, en tant que propriété d'écoulement.

12. Agencement de mesure (1) selon la revendication 11, dans lequel l'unité de détection optique est formée par au moins une caméra (24).

13. Agencement de mesure (1) selon la revendication 11 ou 12, comprenant une unité de détection optique supplémentaire, en particulier une caméra supplémentaire (30) qui est conçue et agencée pour détecter un épanouissement du jet de fluide (16) déposé sur le substrat.

14. Agencement de mesure (1) selon l'une quelconque des revendications 11 à 13, dans lequel l'unité de détection optique (24), et le cas échéant aussi l'unité de détection optique supplémentaire (30), sont disposées de manière stationnaire par rapport à la buse (8) et au substrat.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 106442221 A

**In der Beschreibung aufgeführte Nicht-Patentliteratur**

- **WUNNER FELIX M et al.** Printomics: the high-throughput analysis of printing parameters applied to melt electrowriting. *BIOFABRICATION,* 24. Januar 2019, vol. 11, 025004
- **THOMAS M. ROBINSON et al.** The Next Frontier in Melt Electrospinning: Taming the Jet. *ADVANCED FUNCTIONAL MATERIALS,* 18. August 2019, vol. 29, 1904664
- **HÄRTH, M. ; SCHUBERT, D.W.** Simple Approach for Spreading Dynamics of Polymeric Fluids. *Macromolecular Chemistry and Physics,* 2012, vol. 213 (6), 654-665, https://dx.doi.org/10.1002/macp.201100631